# FASCICULE DE BREVET EUROPEEN

(11) **EP 1 029 775 B1**
(45) Date de publication et mention de la délivrance du brevet: **17.11.2004**
(21) Numéro de dépôt: 00400442.0
(22) Date de dépôt: 17.02.2000
(51) Int. Cl.: B62J 1/16

(54) **Siège enfant pliable pour vélo**
Faltbarer Fahrradkindersitz
Foldable child seat for bicycle

(30) Priorité: 18.02.1999 FR 9902008
(43) Date de publication de la demande: 23.08.2000
(73) Titulaire: Zefal, 45150 Jargeau (FR)
(72) Inventeur: Glotin, Joel, 45560 St Denis en Val (FR)
(74) Mandataire: Santarelli

(56) Documents cités:
- GB-A- 186 944
- GB-A- 573 607
- GB-A- 618 975
- US-A- 5 285 935

## Description

L'invention est du domaine des sièges pour enfants, et particulièrement pour bébés, adaptés à être installés à l'arrière d'un vélo. Le document US-A-5 285 935 décrit un siège vélo pour enfant selon le préambule de la revendication 1.

On connaît aujourd'hui dans ce domaine, des sièges vélo du type général dans lequel un enfant est assis sur le porte-bagages du vélo, avec une jambe de chaque côté de la roue arrière. Ces sièges vélo comportent classiquement une coque fabriquée en matière plastique moulée, sur laquelle est fixé une housse molletonnée.

Un inconvénient des dispositifs de ce type est que la difficulté à les installer et désinstaller fait que, dans la pratique, ces dispositifs sont installés à demeure sur le vélo, pendant plusieurs mois ou années, et présentent à la fois des inconvénients de poids et de prise au vent lorsque aucun enfant n'est installé sur le siège vélo. Par ailleurs, ils empêchent de transporter des objets sur le porte-bagagess du vélo. De même, lorsque des vélos doivent être garés côte à côte, ces dispositifs obligent à espacer beaucoup les vélos, ce qui revient à augmenter l'encombrement général de chaque vélo.

Enfin, lorsque ils sont démontés du vélo, ils présentent un encombrement important.

La présente invention a donc pour but de remédier aux inconvénients précités, en proposant un siège vélo pour enfant dont l'encombrement puisse être sensiblement réduit lorsque le siège n'est pas utilisé.

Selon un autre objectif de l'invention, ce siège est de mise en oeuvre simple, et de fabrication économique.

L'invention propose à cet effet un siège vélo pour enfant, ledit siège vélo comportant un cadre support, un harnais ayant une assise et un dossier, ledit harnais étant fixé sur un cadre support, et des moyens de fixation du cadre support sur un support solidaire du vélo, le cadre support et le harnais ayant une position principale, dans laquelle le cadre support et le harnais ont une largeur et une hauteur suffisantes pour accueillir un jeune enfant, caractérisé en ce que le cadre support et le harnais comportent des moyens adaptés à prendre deux positions principales, la première position principale étant une position dépliée et l'autre position principale étant une position repliée dans laquelle le cadre support et le harnais ont une largeur et une hauteur restreintes.

On comprend que, en position repliée, le siège présente une largeur proche de celle du porte-bagages, ce qui est favorable à la sécurité de conduite du vélo. Il est clair par ailleurs que l'encombrement du siège démonté se trouve nettement réduit par rapport aux dispositifs traditionnels. Enfin, il est envisageable d'utiliser le siège, non monté sur un vélo, simplement posé sur le sol.

Selon un mode de réalisation préféré, le siège vélo comporte un moyen de verrouillage du cadre en position dépliée de manière à augmenter la rigidité du siège vélo et à assurer une sécurité d'utilisation.

Selon un mode particulier de réalisation propre à augmenter la sécurité d'utilisation, le moyen de verrouillage en position dépliée disposé derrière le harnais est accessible par l'arrière du siège vélo et non pas accessible depuis la position de l'enfant dans le siège vélo.

Pour assurer la sécurité de l'enfant en maintenant ses jambes dans des positions prédéfinies, le siège vélo comporte préférentiellement deux jambières repliables.

La description et les dessins d'un mode préféré de réalisation de l'invention, donnés ci-après, permettront de mieux comprendre les buts et avantages de l'invention. Il est clair que cette description est donnée à titre d'exemple, et n'a pas de caractère limitatif. Dans les dessins :
- la figure 1 est une vue de côté du cadre support du siège vélo en position dépliée ;
- la figure 2 est une vue de dessus du cadre support du siège vélo en position dépliée ;
- la figure 3 est une vue de devant du cadre support en position dépliée ;
- la figure 4 est une vue de dessus du même cadre en position repliée ;
- la figure 5 est une vue de côté du même cadre en position repliée ;
- la figure 6 montre, en vue de dessous, le dispositif de fixation de la plaque d'assise sur le porte-bagages d'un vélo ;
- la figure 7 illustre ce même dispositif de fixation, en vue de côté, le garde-boue de la roue arrière étant figuré en traits mixtes ;
- la figure 8 montre une variante de dispositif de verrouillage en vue perspective, en position siège replié ;
- la figure 9 montre cette même variante, le siège étant en position dépliée;
- la figure 10 montre, en vue perspective, une autre variante de moyen de verrouillage du siège en position dépliée ;
- la figure 11 montre cette même variante, en vue en coupe.

Dans la suite de la description, on définit la direction principale du siège vélo comme étant celle qui va de l'arrière vers l'avant du harnais, conformément avec la direction principale d'un vélo sur lequel le siège est destiné à être installé.

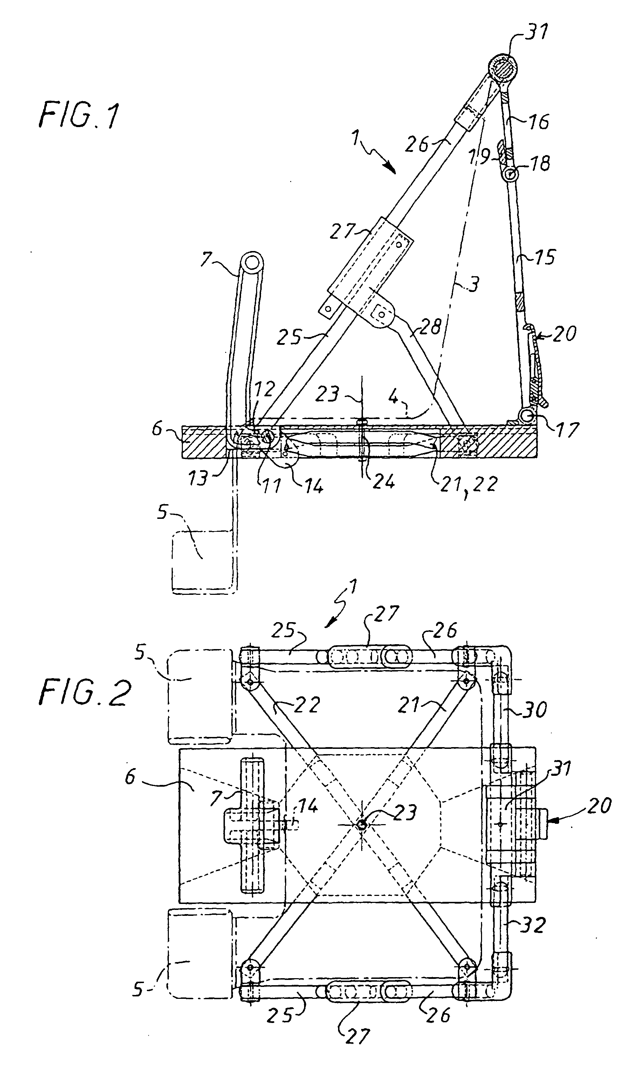

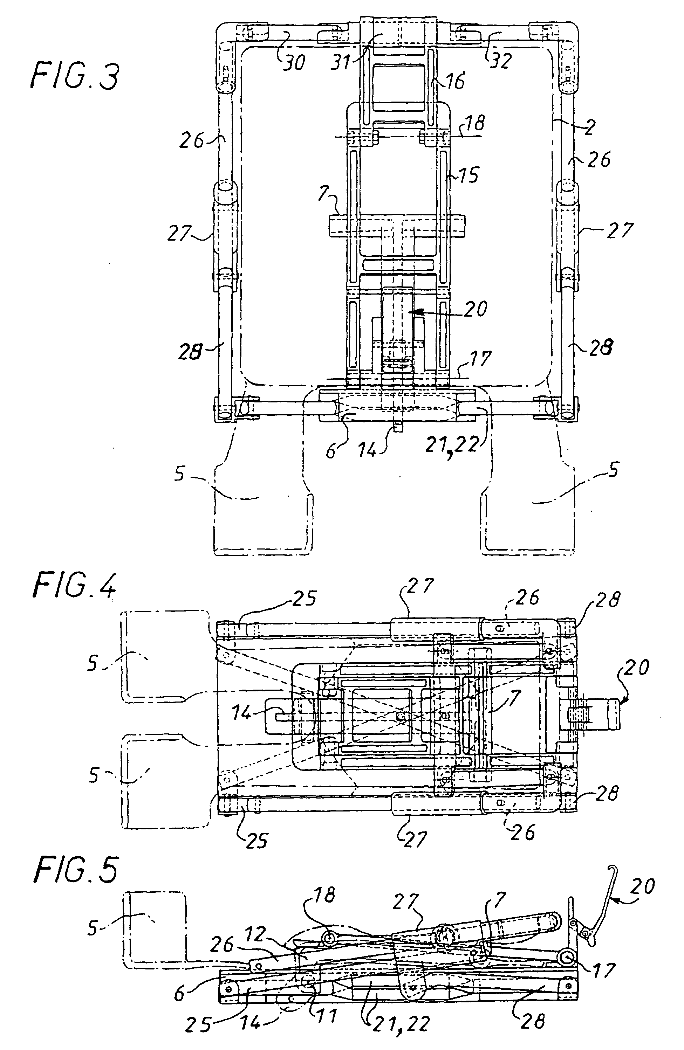

Un siège vélo selon l'invention (en position dépliée, fig. 1 à 3 et repliée, fig. 4 et 5) est constitué d'un cadre support 1, sur lequel vient se fixer un harnais ergonomique 2, lequel comporte un dossier 3 rembourré, un coussin 4 formant siège proprement dit, et deux jambières 5 comportant des repose pieds. Le harnais peut être de type amovible ou fixé à demeure, sans que cela rentre dans le cadre de la présente invention. Le mode de fixation du harnais 2 sur le cadre de support 1 ne sera donc pas détaillé ici.

Le cadre support 1 comporte une plaque d'assise 6, destinée, d'une part, à reprendre les efforts mécaniques exercés sur le siège vélo, d'autre part, à former une surface d'assise horizontale pour le harnais du siège vélo, enfin à permettre la fixation sur un support spécialement adapté ou éventuellement un porte-bagages de vélo de type classique.

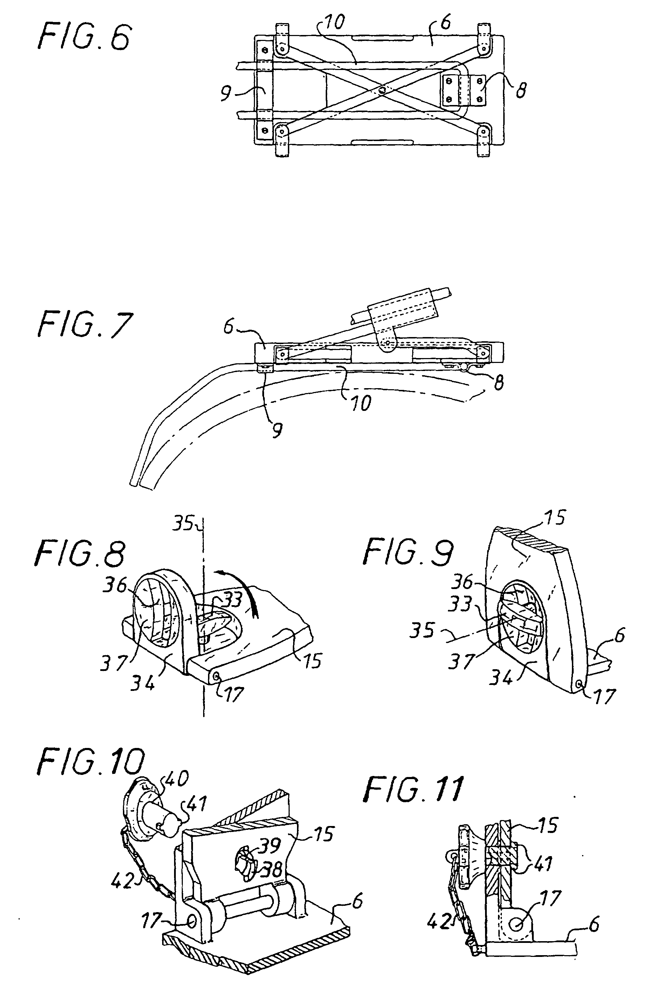

Le dispositif de fixation de la plaque d'assise 6 sur le porte-bagages d'un vélo, (figures 6 et 7), se compose de deux bandes métalliques 8, 9 boulonnées sous la plaque d'assise 6, l'une 9 placée à l'avant de la plaque d'assise 6, et l'autre 8 à l'arrière de celle-ci. Ces deux bandes métalliques 8, 9, essentiellement planes, comportent cependant des logements permettant le passage des tubes de porte-bagages formant le support du siège 10.

Conformément aux normes en vigueur, le siège vélo comporte également un dispositif de ceinture de sécurité, formé par exemple de deux sangles passant sur les épaules et d'une sangle passant entre les jambes de l'enfant, ces sangles étant verrouillées ensemble dans un boîtier plat, destiné à venir se placer sur le ventre de l'enfant. Ces dispositions de ceinture de sécurité sont de nature classique, connues de l'homme de l'art.

Une poignée de préhension du siège vélo est ménagée en partie haute du dossier 3, pour faciliter les opérations de montage/démontage, et le déplacement du siège vélo, ainsi que son pliage et son dépliage.

Sur la plaque d'assise 6 vient s'articuler une barre de rétention 7, conformée en "T" en vue de face, et formant poignées pour l'enfant assis dans le siège vélo. Cette barre de rétention 7 est articulée en rotation autour d'un axe horizontal 11 perpendiculaire à la direction du siège vélo. Elle présente en vue de côté un profil sensiblement en "L", dont le segment inférieur 12 est solidarisé à l'axe 11.

Ce montage assure un blocage mécanique de la barre de rétention 7 vers l'avant, par l'appui du segment inférieur 12 sur le fond d'un logement 13 ménagé dans la plaque d'assise 6. La barre de rétention 7 comporte enfin un ergot d'entraînement 14 destiné à permettre d'entraîner ladite barre de rétention en rotation autour de l'axe horizontal 11 lorsque le cadre support 1 est replié. On comprend que la barre de rétention 7 est alors d'une forme adaptée à lui permettre de venir se coucher sensiblement en appui sur la plaque d'assise 6 (à l'épaisseur du coussin 4 près).

Le cadre support 1 comporte par ailleurs un bâti dossier composé d'un cadre long 15 et d'un cadre court 16. Le cadre long 15 est articulé autour d'un axe 17 horizontal, perpendiculaire à la direction du siège vélo, situé sensiblement au bord arrière de la plaque d'assise 6. Le cadre court 16 est articulé autour d'un axe 18, parallèle au précédent, ménagé en haut du cadre long 15. Le cadre long 15 présente un prolongement formant butée 19, limitant la course en rotation du cadre court 16 à une position correspondant à un alignement des deux cadres en position très légèrement inclinée vers l'avant, lorsque le siège vélo est en position dépliée (figure 1).

Un moyen de verrouillage 20 du cadre long 15 en position verticale est disposé à proximité de la plaque d'assise 6, au dessus de l'axe 17. Ce moyen est constitué, dans un exemple non limitatif, d'un système à baïonnette de type classique. D'autres dispositifs sont naturellement envisageables.

Il est important de noter que ce dispositif de verrouillage est disposé à l'arrière du siège vélo, de manière à rester non accessible depuis la position de l'enfant dans le siège, par mesure de sécurité.

Le mode de déploiement du cadre support 1 est analogue à celui des poussettes cannes repliables pour bébés. Il est donc connu en soi, et les dispositions géométriques exactes permettant son fonctionnement sont donc connues de l'homme du métier.

On rappelle cependant que le cadre support comporte alors un assemblage de tubes comprenant en particulier :
- deux tubes inférieurs 21, 22 (figure 2) placées en "X" et articulés autour d'un axe vertical 23, matérialisé par exemple par un ensemble vis/écrou 24 traversant la plaque d'assise 6,
- de chaque côté deux tubes latéraux 25, 26 placés dans le prolongement l'un de l'autre, selon un montage télescopique, le tube inférieur 25 portant un boîtier 27 permettant le coulissement longitudinal du tube supérieur 26,
- également de chaque côté un tube de renfort 28, attaché au boîtier 27 autour d'un axe 29,
- en partie haute une barre articulée en trois éléments 30, 31, 32, ces éléments étant alignés lorsque le siège vélo est déplié, et disposées en "U" lorsque le siège vélo est replié, l'élément central 31 formant axe d'articulation en rotation pour la partie haute du cadre court 16.

Les tubes latéraux 25, 26 et le tube de renfort 28 sont attachés en leur partie basse aux extrémités des tubes inférieurs 21, 22. Les tubes latéraux supérieurs 26 sont attachés en leur partie haute à la barre articulée 30, 31, 32 en ses deux extrémités. Toutes ces attaches sont de type articulé.

Ces différents tubes sont généralement réalisés en acier ou aluminium pour plus de légèreté, et sont assemblés par des charnières et coudes de type connu. Les articulations sont protégées par des formes arrondies en plastique moulé.

Un ressort de rappel (non représenté sur les figures), constitué par exemple de tige acier coudée en "L", est placé entre l'ergot d'entraînement 14 et les tubes inférieurs 21, 22 placés en "X".

Le harnais 2 comporte des zones de pliage préférentielles, disposées, d'une part, en haut du dossier, d'autre part, sur les côtés au niveau de la jonction dossier siège, enfin, au niveau de la partie haute des jambières 5. Le harnais est de toute manière réalisé en matière souple, adaptée à des pliages fréquents.

En fonctionnement, un utilisateur fixe le siège sur un support spécialement adapté ou éventuellement un porte-bagages à l'aide des bandes boulonnées disposées sous la plaque d'assise, puis déplie le siège vélo et les jambières 5 et repose-pieds du harnais. Il verrouille le cadre long 15 en position dépliée, et peut placer un enfant sur le siège vélo.

En l'absence d'enfant à transporter, il suffit à l'utilisateur de déverrouiller le cadre long 15, et d'exercer un effort vers l'avant sur l'élément haut 31 (et donc sur le cadre court 16, ainsi que sur les tubes latéraux 25, 26. Les tubes latéraux supérieurs 26 coulissent alors à l'intérieur des boîtiers 27 le long des tubes latéraux inférieurs 25, cependant que les éléments extrêmes 30, 32 de la barre articulée se replient vers l'intérieur et que les tubes inférieurs 21, 22 se rabattent l'un vers l'autre.

Le ressort de rappel disposé entre ces tubes inférieurs 21, 22 et l'ergot d'entraînement 14 de la barre de rétention 7 transmet à ladite barre de rétention 7 un mouvement de rotation lorsque on exerce un effort tendant à ramener côte à côte les deux tubes inférieurs 21, 22, amenant ladite barre de rétention 7 à venir se placer le long de la plaque d'assise 6.

De la sorte, l'action de repliement du siège vélo est réalisable d'une seule main, par appui sur l'élément central 31 de la barre articulée, et peut donc être réalisé tout en tenant le vélo de l'autre main.

On comprend que le choix de cette cinématique permet de garantir que lorsque le siège est en position repliée, le cadre support 1 (et plus généralement le siège vélo dans son ensemble) présente une largeur restreinte, plus proche de celle d'un porte-bagages de vélo, et en position dépliée, présente une largeur compatible avec la taille d'un jeune enfant.

Dans une variante de dispositif de verrouillage (figure 8 et 9), celui-ci est composé d'une poignée 33, solidaire du cadre long 15, mais mobile en rotation autour d'un axe 35 (de type poignée de fenêtre), sensiblement perpendiculaire à ce cadre long 15. Un élément fixe 34, solidaire de la plaque d'assise 6, mais sensiblement vertical (perpendiculaire à la plaque d'assise 6), comporte un évidement longitudinal 36 adapté à permettre le passage de la poignée 33. Un creusement 37, par exemple en calotte sphérique, permet alors la rotation de la poignée 33, et on comprend que cette rotation verrouille alors le cadre long en position dépliée.

Dans une autre variante du même dispositif de verrouillage du siège vélo (figures 10 et 11), le cadre long 15 et un élément fixe 34 solidaire de la plaque d'assise 6, mais sensiblement vertical, comportent des alésages 38 adaptés à être alignés lorsque le siège est déplié. Ces alésages 38 sont par exemple de forme cylindrique et comportent deux creusements rectilignes diamétralement opposés 39. Lors du déploiement du siège vélo, une clé 40, comportant un prolongement à baïonnette 41, est introduite dans les alésages 38 alignés de l'élément fixe 34 et du cadre long 15, puis tournée d'un quart de tour pour réaliser le verrouillage effectif du siège. Une chaînette 42 évite de perdre la clé 40.

La portée de la présente invention ne se limite pas aux détails des formes de réalisation ci-dessus considérées à titre d'exemple, mais s'étend au contraire aux modifications à la portée de l'homme de l'art telles que définies dans les revendications suivantes.

## Revendications

1. Siège vélo pour enfant, ledit siège vélo comportant un cadre support (1), un harnais (2) ayant une assise et un dossier, ledit harnais étant fixé sur le cadre support (1), et des moyens de fixation du cadre support (1) sur un support solidaire du vélo, le cadre support (1) et le harnais (2) ayant une position principale, dans laquelle le cadre support (1) et le harnais (2) ont une largeur et une hauteur suffisantes pour accueillir un jeune enfant, **caractérisé en ce que** le cadre support (1) et le harnais (2) comportent des moyens adaptés à prendre deux positions principales, la première position principale étant une position dépliée et l'autre position principale étant une position repliée dans laquelle le cadre support (1) et le harnais (2) ont une largeur et une hauteur restreintes.

2. Siège vélo selon la revendication 1, **caractérisé en ce que** le cadre support (1) comporte un moyen de verrouillage (20) en position dépliée, accessible par l'arrière du siège vélo.

3. Siège vélo selon la revendication 2, **caractérisé en ce que** le moyen de verrouillage (20) est disposé derrière le harnais (2).

4. Siège vélo selon l'une quelconque des revendications 1 à 3, **caractérisé en ce qu'**il comporte deux jambières repliables (5).

5. Siège vélo selon l'une quelconque des revendications 1 à 4, **caractérisé en ce qu'**il comporte une poignée de préhension, ménagée en partie haute du dossier (3).

6. Siège vélo selon la revendication 4, **caractérisé en ce que** le harnais (2) comporte des zones de pliage préférentielles, disposées, d'une part, en haut du dossier, d'autre part, sur les côtés au niveau de la jonction dossier siège, enfin, au niveau de la partie haute des jambières (5).

7. Siège vélo selon l'une quelconque des revendications 1 à 6, **caractérisé en ce qu'**il comporte un moyen de rétention (7) formant poignées.

8. Siège vélo selon la revendication 7, **caractérisé en ce que** la barre de rétention (7) est articulée en rotation sur la plaque d'assise (6) autour d'un axe horizontal (11) perpendiculaire à la direction du siège vélo et **en ce que** le siège vélo comporte un moyen de blocage mécanique (12, 13) de la barre de rétention (7) vers l'avant.

9. Siège vélo selon la revendication 8, **caractérisé en ce qu'**il comporte un moyen de rappel, disposé entre un ergot d'entraînement (14) de la barre de rétention (7) et les tubes inférieurs (21, 22), adapté à transmettre un mouvement de rotation à la barre de rétention (7) lorsque les tubes inférieurs (21, 22) sont rapprochés l'un de l'autre.

10. Siège vélo selon l'une quelconque des revendications 1 à 9, **caractérisé en ce que** le cadre support (1) comporte un assemblage repliable de tubes comprenant :
- deux tubes inférieurs (21, 22) placés en "X" et articulés autour d'un axe vertical (23),
- de chaque côté deux tubes latéraux (25, 26) placés dans le prolongement l'un de l'autre, selon un montage télescopique, et un tube de renfort (28), articulé sensiblement au point de jonction entre les tubes latéraux (25, 26),
- en partie haute une barre articulée en trois éléments (30, 31, 32), ces éléments étant adaptés à être soit alignés (lorsque le siège vélo est déplié), soit disposés en "U" (lorsque le siège vélo est replié),
- les tubes latéraux (25, 26) et les tubes de renfort (28) étant articulés en leur partie basse aux extrémités des tubes inférieurs (21, 22), les tubes latéraux supérieurs (26) étant articulés en leur partie haute à la barre articulée (30, 31, 32) en ses deux extrémités.

11. Siège vélo selon l'une quelconque des revendications 1 à 10, **caractérisé en ce que** le cadre support (1) comporte un bâti dossier composé d'un cadre long (15) et d'un cadre court (16), le cadre long (15) étant articulé autour d'un axe (17) horizontal, perpendiculaire à la direction du siège vélo, situé sensiblement au bord arrière de la plaque d'assise (6), le cadre court (16) étant articulé autour d'un axe (18), parallèle au précédent, ménagé en haut du cadre long (15), le cadre long (15) présentant un prolongement formant butée (19), limitant la course en rotation du cadre court (16) à une position correspondant à un alignement des deux cadres en position très légèrement inclinée vers l'avant, lorsque le siège vélo est en position dépliée.

## Claims

1. Child's bicycle seat comprising a support frame (1), a harness (2) having a seat and a back support, said harness being fixed to the support frame (1), and means for fixing the support frame (1) to a support fastened to a bicycle, the support frame (1) and the harness (2) having a principal position in which the support frame (1) and the harness (2) have a width and a height sufficient to accommodate a young child, **characterized in that** the support frame (1) and the harness (2) comprise means adapted to assume two principal configurations, the first principal configuration being an unfolded configuration and the other principal configuration being a folded configuration in which the support frame (1) and the harness (2) have a smaller width and a smaller height.

2. Bicycle seat according to claim 1, **characterized in that** the support frame (1) comprises locking means (20) for locking it in the unfolded configuration accessible from the rear of the bicycle seat.

3. Bicycle seat according to claim 2, **characterized in that** the locking means (20) are disposed behind the harness (2).

4. Bicycle seat according to any of claims 1 to 3, **characterized in that** it comprises two foldable leg guards (5).

5. Bicycle seat according to any of claims 1 to 4, **characterized in that** it comprises a handle provided in an upper portion of the back support (3).

6. Bicycle seat according to claim 4, **characterized in that** the harness (2) comprises preferential bending regions disposed, firstly, at the top of the back support, secondly, at the sides at the level of the back support/seat junction, and, finally, at the level of the upper portion of the leg guards (5).

7. Bicycle seat according to any of claims 1 to 6, **characterized in that** it comprises retaining means (7) forming handlebars.

8. Bicycle seat according to claim 7, **characterized in that** the retaining bar (7) is pivoted to the baseplate (6) to rotate about a horizontal shaft (11) perpendicular to the direction of the bicycle seat and **in that** the bicycle seat comprises means (12, 13) for mechanically immobilizing the retaining bar (7) in the forward direction.

9. Bicycle seat according to claim 8, **characterized in that** it comprises return means disposed between a drive lug (14) on the retaining bar (7) and the lower tubes (21, 22) and adapted to transmit rotation to the retaining bar (7) when the lower tubes (21, 22) are moved toward each other.

10. Bicycle seat according to any of claims 1 to 9, **characterized in that** the support frame (1) comprises a folding assembly of tubes comprising:
- two lower tubes (21, 22) arranged in an "X" and articulated about a vertical shaft (23),
- two aligned lateral tubes (25, 26) on each side in a telescopic arrangement and a reinforcing tube (28) articulated substantially to the junction point between the lateral tubes (25, 26),
- in its upper portion an articulated bar comprising three portions (30, 31, 32) adapted to be either aligned (when the bicycle seat is unfolded) or arranged in a U-shape (when the bicycle seat is folded), and
- the lower portions of the lateral tubes (25, 26) and the reinforcing tubes (28) being articulated to the ends of the lower tubes (21, 22), the upper portions of the upper lateral tubes (26) being articulated to the two ends of the articulated bar (30, 31, 32).

11. Bicycle seat according to any of claims 1 to 10, **characterized in that** the support frame (1) comprises a back support frame comprising a long frame (15) and a short frame (16), the long frame (15) being articulated about a horizontal shaft (17) perpendicular to the direction of the bicycle seat and situated substantially at the rear edge of the baseplate (6), the short frame (16) being articulated about a shaft (18) parallel to the preceding shaft and situated at the top of the long frame (15), the long frame (15) having an extension forming an abutment (19) limiting rotation of the short frame (16) to a position corresponding to alignment of the two frames in a position very slightly inclined toward the front when the bicycle seat is in its unfolded configuration.

## Patentansprüche

1. Kinderfahrradsitz, der einen Tragrahmen (1), eine an dem Tragrahmen (1) befestigte Schale (2) mit einer Sitzfläche und einer Rückenlehne sowie Mittel zum Befestigen des Tragrahmens (1) an einem mit dem Fahrrad fest verbundenen Träger umfasst, wobei der Tragrahmen (1) und die Schale (2) eine Hauptposition besitzen, in der der Tragrahmen und die Schale (2) eine Breite und eine Höhe haben, die ausreichen, um ein Kleinkind aufzunehmen, **dadurch gekennzeichnet, dass** der Tragrahmen (1) und die Schale (2) Mittel umfassen, die zwei Hauptpositionen annehmen können, wobei die erste Hauptposition eine ausgeklappte Position ist und die andere Hauptposition eine eingeklappte Position ist, in der der Tragrahmen (1) und die Schale (2) eine geringe Breite und eine geringe Höhe besitzen.

2. Fahrradsitz nach Anspruch 1, **dadurch gekennzeichnet, dass** der Tragrahmen (1) ein Mittel (20) für eine Verriegelung in der ausgeklappten Position umfasst, das von der Rückseite des Fahrradsitzes zugänglich ist.

3. Fahrradsitz nach Anspruch 2, **dadurch gekennzeichnet, dass** das Verriegelungsmittel (20) hinter der Schale (2) angeordnet ist.

4. Fahrradsitz nach einem der Ansprüche 1 bis 3, **dadurch gekennzeichnet, dass** er zwei einklappbare Fußstützen (5) umfasst.

5. Fahrradsitz nach einem der Ansprüche 1 bis 4, **dadurch gekennzeichnet, dass** er einen Griff aufweist, der im oberen Teil der Rückenlehne (3) ausgebildet ist.

6. Fahrradsitz nach Anspruch 4, **dadurch gekennzeichnet, dass** die Schale (2) Zonen für ein bevorzugtes Umbiegen umfasst, die einerseits im oberen Teil der Rückenlehne und andererseits an den Seiten auf Höhe der Verbindung zwischen Rückenlehne und Sitz und schließlich auf Höhe des oberen Teils der Fußstützen (5) angeordnet sind.

7. Fahrradsitz nach einem der Ansprüche 1 bis 6, **dadurch gekennzeichnet, dass** er ein Rückhaltemittel (7) umfasst, das Griffe bildet.

8. Fahrradsitz nach Anspruch 7, **dadurch gekennzeichnet, dass** die Rückhaltestange (7) an der Sitzflächenplatte (6) um eine zur Richtung des Fahrradsitzes senkrechte horizontale Achse drehbar angelenkt ist und dass der Fahrradsitz mechanische Mittel (12, 13) zum Blockieren der Rückhaltestange (7) in Vorwärtsrichtung umfasst.

9. Fahrradsitz nach Anspruch 8, **dadurch gekennzeichnet, dass** er ein Rückstellmittel umfasst, das zwischen einer Antriebsnase (14) der Rückhaltestange (7) und unteren Rohren (21, 22) angeordnet ist und auf die Rückhaltestange (7) eine Drehbewegung übertragen kann, wenn die unteren Rohre (21, 22) einander angenähert werden.

10. Fahrradsitz nach einem der Ansprüche 1 bis 9, **dadurch gekennzeichnet, dass** der Tragrahmen (1) eine Klappkonstruktion der Rohre umfasst, die ihrerseits umfasst:
- zwei untere Rohre (21, 22), die "X"-förmig angeordnet und um eine vertikale Achse (23) angelenkt sind,
- auf jeder Seite zwei seitliche Rohre (25, 26), die in einer gegenseitigen Verlängerung teleskopartig angeordnet sind, und ein Verstärkungsrohr (28), das im Wesentlichen am Verbindungspunkt zwischen den seitlichen Rohren (25, 26) angelenkt ist,
- im oberen Teil eine angelenkte Stange aus drei Elementen (30, 31, 32), die so beschaffen sind, dass sie entweder aufeinander ausgerichtet sind (wenn der Fahrradsitz ausgeklappt ist) oder "U"-förmig angeordnet sind (wenn der Fahrradsitz eingeklappt ist),
- wobei die seitlichen Rohre (25, 26) und die Verstärkungsrohre (28) in ihrem unteren Teil an den Enden der unteren Rohre (21, 22) angelenkt sind, wobei die oberen seitlichen Rohre (26) in ihrem oberen Teil an der angelenkten Stange (30, 31, 32) an ihren zwei oberen Enden angelenkt sind.

11. Fahrradsitz nach einem der Ansprüche 1 bis 10, **dadurch gekennzeichnet, dass** der Tragrahmen (1) einen Rückenlehnenrahmen umfasst, der aus einem langen Rahmen (15) und aus einem kurzen Rahmen (16) gebildet ist, wobei der lange Rahmen (15) um eine horizontale Achse (17), die zur Richtung des Fahrradsitzes senkrecht ist, angelenkt ist und sich im Wesentlichen an der Hinterkante der Sitzplatte (6) befindet, der kurze Rahmen (16) um eine Achse (18), die zu der vorhergehenden parallel ist und im oberen Teil des langen Rahmens (15) ausgebildet ist, angelenkt ist, und der lange Rahmen (15) eine einen Anschlag (19) bildende Verlängerung aufweist, die die Drehbahn des kurzen Rahmens (16) auf eine Position einschränkt, die einer Ausrichtung der zwei Rahmen auf eine sehr geringfügig nach vorn geneigte Position entspricht, wenn der Fahrradsitz in der ausgeklappten Position ist.
